# EUROPEAN PATENT SPECIFICATION

(11) **EP 3 524 381 B1**
(45) Date of publication and mention of the grant of the patent: **11.11.2020**
(21) Application number: 19156232.1
(22) Date of filing: 08.02.2019
(51) Int. Cl.: B23K 35/26, B23K 1/00, B23K 1/012, B23K 35/34, F24D 3/00, F24D 3/02, F24D 3/14, F24D 3/16, F24F 5/00, F28D 1/047, F28F 1/20, B23K 3/04, F28F 1/34

(54) **METHOD AND DEVICE FOR MANUFACTURING HEAT-EXCHANGING ELEMENTS, AND ELEMENTS AS SUCH**
VERFAHREN UND VORRICHTUNG ZUR HERSTELLUNG VON WÄRMETAUSCHELEMENTEN UND ELEMENTE ALS SOLCHE
PROCÉDÉ ET DISPOSITIF DE FABRICATION D'ÉLÉMENTS D'ÉCHANGE DE CHALEUR ET DE TELS ÉLÉMENTS

(30) Priority: 09.02.2018 NL 2020406
(43) Date of publication of application: 14.08.2019
(73) Proprietor: Inteco B.V., 5281 RP Boxtel (NL)
(72) Inventor: Holthuizen, Jacobus Hubert Joseph Marie, 5627 VJ Eindhoven (NL)
(74) Representative: Brantsandpatents bvba

(56) References cited:
- GB-A- 1 357 073
- US-A- 4 929 423
- US-A1- 2004 256 093
- US-A1- 2007 034 364
- US-A1- 2014 079 472
- US-A1- 2016 158 896
- US-A1- 2017 274 481
- US-A1- 2017 276 437
- US-A1- 2017 363 376
- US-B1- 6 443 355

## Description

### TECHNICAL DOMAIN

The present invention relates to heat exchange element, for the exchange of heat between a heat transporting medium and an inner space, for heating and/or cooling that inner space. Furthermore, the invention relates to a method and device for the fabrication of such elements.

### STATE OF THE ART

Heat exchange elements, for the exchange of heat between a heat transporting medium and an inner space, are known as such in the state of the art.

Indeed, EP 0 859 097 A1 describes a ceiling element that has specifically been designed for equally cooling and heating inner spaces. Thereto, the element comprises a meandering tube that has been soldered to a flat honeycomb structure. For cooling/heating the underlying inner space, cold/warm water is transported through said tube. Radiation heat is thereby withdrawn/released via the honeycomb structure to that space. EP 0 859 097 A1 also discloses that, for having a high-quality soldering connection, it is necessary that the tube and honeycomb structure are made of the same material; for example, they are both made of copper, or aluminium.

However, copper is a relatively expansive material, increasing the material cost of copper ceiling elements. Aluminium, on the other hand, has a relatively high elasticity, so that it is not easy to make a delicate, however sufficiently rigid ceiling element out of this material, which element thereby does not have the tendency to sag. Next to their material cost and rigidity, such elements are also amongst other things judged on their attractive look, their heat exchange capacity, their production cost, their installation cost and their durability. Also, the strength of the (soldering) connections is very important. The present invention aims to offer an improved heat exchange element.

US 4 742 950 A also describes a device for soldering aluminium objects such as heat exchangers. Thereto, the invention comprises a separate preheating furnace, soldering furnace and cooling chamber. The objects to solder are successively led through these mutually successive furnaces/chambers by means of little carts. Both in the preheating furnace and in the soldering furnace, a heated air flow is thereby blown against the objects on the carts.

Important disadvantages of these and similar soldering installations are their large size, with consequently a high installation cost and a high energy consumption, even with application of thermal isolation. Another problem is that they cannot be used flexibly; the furnace itself indeed possesses a significant heat capacity, which hinders abrupt changes in furnace temperature. Moreover, when such an installation must be started from a cold state, it takes some time before the desired preheating and soldering temperatures are reached. When switching off the furnace, on the other hand, all heat, that has been invested when switching on the oven structure, seeps away irrevocably. Actually, such soldering furnaces are therefore only appropriate for uninterrupted operation.

In case such a soldering installation moreover provides a continuous input and output of objects, i.e. a continuous transport system, a lot of heat then also escapes via these open input and output openings. Moreover, it happens that colder air flows enter the furnace volumes, via these openings. The consequence is that the furnace temperature can fluctuate. For compensating this, the furnace temperature, air flow speed and residence time are typically set a little higher/larger than ideally. In circumstances with limited temperature fluctuations, this can significantly reduce the quality of the obtained soldering connections, because of the systematic overheating of the soldering and the work pieces.

Finally, US 2006 011 267 A1 discloses a soldering paste for soldering electronic components on electronic printed circuit boards. For attachment of such a component, only a very small amount of soldering paste must be applied onto the printed circuit board, with a layer thickness of 0.08 mm to 0.25 mm. Moreover, the soldering temperatures are rather low (preferably about 235°C), considering the temperature sensitivity of the electronic components.

US 2017 276 437 discloses a plate-and-tube heat exchange evaporative condenser. It has a heat transfer plate provided with a serpentine groove. A serpentine tube is disposed within the groove. Further, a gap between the serpentine tube and the groove is filled with a thermally conductive adhesive layer.

US 6 443 355 discloses a soldering method and apparatus for soldering printed wired boards.

The present invention aims to offer a solution for at least one of the above-mentioned problems.

### SUMMARY OF THE INVENTION

In a first aspect, the invention provides the method of claim 1, for the fabrication of a heat exchange element, via the soldering of a plate structure to a tube structure. In particular, the soldering paste is locally heated, at the level of a passing heating zone at the plate structure. Said heating zone minimally covers the plate width, and maximally only a part of the plate length. Local heating, rather than global heating, allows the use of a much smaller soldering device. Optionally, the plate structure thereby possesses a higher heat conduction in the width direction than in the longitudinal direction.

In a second aspect, the invention provides the device of claim 8, for soldering flat metal work pieces. Preferably, the device is configured for realizing the method according to the first aspect of the invention.

### DESCRIPTION OF THE FIGURES

**Figure 1** shows a perspective view of a heat exchange element, according to an embodiment of the present invention.
**Figure 2A** is a detailed illustration of a part of a tube structure, according to a possible embodiment.
**Figure 2B** shows another cross-section of a tube structure, according to a possible embodiment.
**Figure 3** is a detailed illustration of a piece of stretch metal, according to a possible embodiment of the plate structure.
**Figures 4A and 4B** respectively show an upper view of, and a front view onto a cross-section of a work piece according to a possible embodiment.
**Figures 5A and 5B** show schematic cross-sections of soldering devices according to possible embodiment of the present invention.
**Figure 6** shows another perspective view of a soldering device according to an embodiment of the invention.
**Figure 7** shows another embodiment of a device for soldering flat metal work pieces, according to a possible embodiment of the invention.

### DETAILED DESCRIPTION

The invention relates to a method and device for the fabrication of heat exchange elements, and furthermore also to heat exchange elements as such.

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

When "approximately" is used in the document together with a measurable quantity, a parameter, a period or moment, etc., variations of +/-20% or less, preferably +/-10% or less, more preferably +/-5% or less, still more preferably +/-1% or less, and even still more preferably +/-0.1% or less than and of the cited value are meant, as far as such variations apply to the invention that is described. It will however be clearly understood that the value of the quantity at which the term "approximately" is used, is itself specified.

The terms "include", "including", "consist", "consisting", "provide with", "contain", "containing", "comprise", "comprising" are synonyms and are inclusive of open terms that indicate the presence of what follows, and that do not exclude or prevent the presence of other components, characteristics, elements, members, steps, known from or described in the state of the art.

The citation of numeric intervals by means of end points includes all integers, fractions and/or real numbers between the end points, including these end points.

In a first aspect, the invention provides a method for the fabrication of a heat exchange element, the element comprising a metal tube structure and a metal plate structure, which tube structure is connected to the plate structure in a heat-conducting way, wherein the tube structure is further configured for transporting a heat transport medium, the method comprising the following steps:
- providing the tube structure and the plate structure,
- applying one or more portions of soldering agent, against and along the tube structure,
- arranging the plate structure against and along the tube structure, at least in the area of the soldering agent, and
- heating the soldering agent according to a predefined temperature path that comprises at least a pre-heating path and a soldering path for establishing a soldering connection between said plate structure and said tube structure;
the plate structure comprising a length direction and a width direction, in which directions the plate structure has a plate length and a plate width, respectively. In particular, the heating takes place in a heating zone that advances along said plate structure in said length direction, which zone minimally covers the plate width, and maximally covers only a part of the plate length.

In a further embodiment of said method, the element comprises a metal tube structure and a partially open, metal plate structure, which plate structure defines a plurality of openings, and which tube structure is connected to the plate structure in a heat-conducting way, and which is thereby further appropriate for transporting a heat transport medium; the method comprising the following steps:
- providing the tube structure and the plate structure,
- applying, against and along the tube structure, one or more portions of a soldering paste, which soldering paste comprises a flowing agent and a metal powder,
- arranging the plate structure against and along the tube structure, at least at the soldering paste, and
- heating the soldering paste according to a predetermined temperature path, in which the tube structure and the plate structure are connected via soldering.

In particular, at arranging, the soldering paste is forced at least partially into one or more openings of the plate structure, in which the soldering paste has a viscosity of minimum 250 Pa.s and maximum 350 Pa.s. When heating the soldering paste, a soldering connection is formed between the tube structure and the plate structure. Above-said portion can moreover relate to a caterpillar-shaped portion of soldering paste, but is not at all limited thereto.

Such elements can be used for heating and/or cooling inner spaces. For example, they are provided along a wall (e.g. a wall element) or along a ceiling (e.g. a ceiling element). Depending on the intended application, a heat transporting medium (e.g. water, but not at all limited thereto) is led through the tube structure, with a temperature that is higher or lower than the surrounding temperature in the inner space. Because of the heat conducting contact between both, the temperatures of both the tube structure and the plate structure are forced into the direction of the same temperature of the heat transport medium. In particular, the plate structure provides a large, essentially flat or slightly curved and/or twisted surface, with which it exchanges radiation heat with the adjoining space. Of course, heat can moreover be exchanged with the space and space air, by means of convection and/or conduction. Preferably, the tube structure is shaped in such way that it results in a more uniform temperature distribution over the surface of the plate structure. For example, the tube structure has a meandering shape or a double helical shape; it is however not limited thereto.

It is additionally advantageous that the plate structure has a "partially open structure", meaning that it is provided with a plurality of openings. According to a non-limiting example, it relates to a flat honeycomb structure, with separation walls extending perpendicularly to the surface of the plate structure. According to another example, it relates to a thin, perforated plate. According to another example, the plate structure comprises a (cut and) stretched plate - also called "stretch metal". Of course, the invention is not limited to these examples. The presence of openings in the plate structure moreover ensures that such elements do not or barely disturb the acoustics of the space. Preferably, the openings in the plate structure have a regular arrangement.

The present invention allows a very efficient production of heat exchange elements. In particular, use is thereby made of a soldering paste, for mutually connecting the metal tube structure and the metal plate structure, via soldering techniques. Such soldering pastes essentially comprise a soldering powder and a flowing agent, in which the flowing agent is often called the "flux" of the soldering paste. The soldering paste, on the one hand, comprises a plurality of metal particles, with a mean diameter of some to hundreds of microns. When heating the paste to the "soldering temperature", these particles flow together both mutually and with the surfaces of the work pieces - here the plate structure and the tube structure -, for forming a soldering connection in between. The flowing agent or the flux, on the other hand, thereby comprises solvents, consistency providers and activators. The solvents and consistency providers have as their main function the stabilisation of the paste in its pasteous state, with a predetermined viscosity stickiness and resistance to sagging. The final values of that viscosity, stickiness and resistance to sagging of the paste are off course also influenced by other factors, for example by the means particle diameter and diameter distribution of the metal powder. Finally, activators contribute to the removal of fat and dirt, as well as of oxides at the surfaces of the metal particles, and possibly at the surfaces of one or both work pieces. When soldering, the flowing agent furthermore constitutes a kind of protective cover, for avoiding further formation of oxides. In this way, a more rigid connection can be obtained. Finally, the smelted metal powder pushes away the flowing agent, in which it flows together with the surfaces of the work piece to solder. Optionally, (a part of) the flowing agent stays behind, for example on top of the soldering connection.

A large advantage of a soldering paste is that the steps of (a) applying the soldering (i.e. the soldering paste), and of (b) the soldering of the connection (i.e. the heating to the soldering temperature) are mutually disconnected. For example, the soldering paste - here the paste - can be applied very accurately in a first step. Only in the second step, at heating, the paste realizes an effective soldering connection. In the meantime, the paste can, as a result of its stickiness, contribute to the cohesion of the already partially assembled tube structure and plate structure, for example when transporting it to the heating device, e.g. the soldering furnace.

Preferably, the soldering paste has a viscosity of minimum 50 Pa·s and maximum 800 Pa·s, more preferably maximum 700 Pa·s, more preferably maximum 600 Pa·s, more preferably minimum 100 Pa·s, more preferably minimum 150 Pa·s, more preferably maximum 600 Pa·s, more preferably maximum 550 Pa·s, more preferably maximum 500 Pa·s, more preferably minimum 150 Pa·s, more preferably minimum 200 Pa·s, more preferably maximum 450 Pa·s, more preferably maximum 400 Pa·s, more preferably maximum 350 Pa·s, more preferably minimum 250 Pa·s, more preferably minimum 260 Pa·s, more preferably minimum 270 Pa·s, more preferably maximum 340 Pa·s, more preferably minimum 280 Pa·s. The most preferred viscosity for the soldering paste is situated between 290 Pa·s and 330 Pa·s. The viscosity of the soldering paste is thereby expressed in Poiseuille (i.e. Pascal times second). Preferably, the viscosity is measured at 25°C, for example via the standard IPC-TM-650 2.4.34.4, or according to another appropriate standard. The viscosity is thereby a measure for the resistance of the soldering paste against deformation.

In a possible embodiment, the tube structure is an essentially flat meandering tube structure, optionally with a round cross-section, i.e. the tube essentially comprises straight segments and/or curved segments all extending essentially in the same plane. Thereby, the tube structure is arranged in such way that said plane extends essentially horizontally. Subsequently, one or more caterpillar-shaped portions of soldering paste are provided onto the tube, along (a part of) the extent of the tube. The soldering paste should now be sufficiently viscous, and be sufficiently resistant against sagging. Indeed, if this would not be the case, the paste would drain too much off the round tube shape, in which it does not longer contribute to the soldering connection. This is even more the case for smaller tube diameters. Typically, the value for the tube diameter is situated between about 3 mm and about 6 mm; for example, the tube diameter is approximately equal to 8 mm, 10 mm, 12 mm, 14 mm or 16 mm. The tube diameter is however not limited to any of these values. A too high viscosity, on the other hand, entails problems for the soldering paste soldering installation, so that no uninterrupted, caterpillar-shaped portions of soldering paste with a constant/controllable height and width can be applied. In the soldering technique, use is typically made of the paste with the highest viscosity, that can still be applied by means of a dosing installation.

Preferably, the heat exchange element is configured for the exchange of heat between a heat transporting medium and an inner space, for heating and/or cooling that inner space. For example, it is used as a ceiling element or wall element (and/or optionally as a floor element or a free standing/lying element). Thereto, it should in any case be sufficiently strong, so that it does not sag. The emphasis sis thus on a strong, durable and structural connection of the work pieces, rather than an electrically conductive connection, as is the case in soldering connections in electronics.

It has not been determined that, when one or more openings of the plate structure are arranged at a soldering connection with the tube structure, the mutual soldering connection is much stronger there. Preferably, the openings in the plate structure are arranged according to a regular grid, and a plurality of such openings (for example according to directions in which they follow each other in a regular way) is arranged at a soldering connection. It is supposed that at the arrangement of the plate structure against and along the tube structure, the soldering paste, still in its pasteous state, is forced into the openings of the plate structure, for example under the influence of the pushing force of the plate structure against the tube structure. As a consequence of said viscosity value, it thereby flows along the opening edge parts, in which they take the negative of these opening edge parts and thereby make an intimate contact with both the plate structure, at the opening edge parts, and the tube structure.

The inventors have moreover determined that, for viscosity values of the paste in one of said preferred intervals, the soldering paste is already ideally in pasteous state in the openings and along the opening edge parts. This configuration then offers an ideal onset for the paste to further flow, during soldering/heating, along these opening edge parts, until deeper and/or along these openings, for forming a rigid soldering connection.

According to a further or alternative embodiment, the tube structure essentially comprises copper, and the plate structure essentially comprises aluminium, in which the flowing agent at least comprises activators for interaction with aluminium oxide. Thereby, the tube structure will significantly contribute to the rigidity of the element, because of its circular profile, and furthermore because of the relatively high bending strength and elasticity modulus of copper, with a minimal use of relatively expensive copper. On the other hand, the aluminium plate structure thereby offers a cheap, light, however large surface for the exchange of radiation/conduction/convection heat with the space. Copper and aluminium are moreover excellent heat conductors, so that both the rigidity and the heat exchange power of such an element are high.

An activator is a material that dissolves, or in any other way, changes when heating it to an activation temperature. Thereby, by-products are formed that react with oxides on the surfaces of the work pieces and/or the particles of the metal powder. Preferably, such activators are always present to remove the oxides from the surface of individual metal particles, to obtain a good merge of the particles. Preferably, however, the flowing agent comprises one or more activators for removing aluminium oxide from the work piece, by reacting with that aluminium oxide and by loosening it in any other way. Indeed, aluminium typically has a solid oxide skin, which would hinder the realization of a soldering connection. This provision allows the above-said design, with an aluminium plate structure and a copper tube structure.

In a further or alternative embodiment, the plate structure comprises a stretched plate structure. A "stretched metal plate structure" or "stretch metal structure" should be interpreted in this document as comprising a tin-plate metal that has been cut and stretched, for forming a regular pattern of openings, also called "stretch meshes".

Optionally, such a stretch metal can be made from tin-plate metal that is stretched according to the "stretching direction", in which it was previously cut, essentially perpendicularly to the stretching direction - i.e. according to the "width direction". In particular, the provided cuts are pulled open when stretching, in which the stretch meshes arise. Thereto, use is for example made of drums, for tensioning the cut tin-plate metal, in which the cuts are pulled open/stretched into stretch meshes. Preferably, however, the stretch metal is made of tin-plate metal by cutting it by means of a profiled knife. The profiled knife thereby ensures both the incision of the tin-plate metal, and the pulling-open of the incision into stretch-meshes. Stretch metal obtained by these en possibly also other processes are known by the skilled worker, and are appropriate for application in the present invention.

In any case, the stretch metal forms a plurality of "stretch bridges", which stretch bridges define stretch meshes in between, and that are mutually connected at "knuckles". More preferably, the plate structure comprises an "elevated stretch metal", in that sense that, when stretching, a profiling in the height arises, from the plane of the tin-plate metal/stretch metal, and that this profiling is not or is only partially pushed/rolled flat afterwards. As a result, the stretch metal gets a better bending stiffness, increasing the rigidity of the element, for one and the same amount of material. An important advantage of stretch metal is that it can be produced easily and in a cheap way. These and other stretched metal plate structures, appropriate for use in the present invention, are known by the skilled worker.

Preferably, at least one of the (caterpillar-shaped) portions essentially extends in a stretching direction of the plate structure. Thus, a soldering connection also essentially extends in this stretching direction, as well as the adjoining tube segment that is connected to the plate structure via this soldering connection. More preferably, the stretch meshes forms elongated openings in the stretch metal, that essentially extend in the width direction. As a result, the stretch bridges also mainly have an inclined orientation, mainly according to the width direction. Consequently, such a stretch metal has a maximum heat conduction, bending strength and bending stiffness in the width direction. It is thus advantageous that the soldering connection and the tube segment extend in the stretching direction. The tube segment thereby ensures the stiffness and strength in the longitudinal direction of the element, as well as the heat transport in that direction, via the transported heat transporting medium. This thus increases both the rigidity and the heat exchange capacity of the element. The latter is because of the more equal temperature distribution over the plate structure. Another advantage is that the distances between successive knuckles and subsequent stretch bridges are shorter in the stretching direction. Such a design thus provides a more regular positioning of pointed soldering connections for the tube structure, according to the stretching direction. When heating, the soldering paste of the originally uninterrupted caterpillar can thereby flow in the direction of the most closely situated pointed soldering connection. Preferably, the tube segment is attached to the stretch metal, approximately at the level of the knuckles. This is however not necessarily the case.

A possible disadvantage of such a stretch metal plate structure is that the contact surface, offered by the knuckles (and possibly by the stretch bridges), is formed by sharp edges. We hereby refer to the examples and figures. The direct contact between the tube structure and the plate structure is thus formed by contact points, rather than contact lines (e.g. at thick-walled honeycomb structure on a round tube) or contact planes (e.g. at a flat plate on a rectangular tube).

For still obtaining a sufficiently rigid soldering connection, the invention now provides a soldering paste as described above, and that preferably has a viscosity, situated between about 290 Pa·s and about 330 Pa·s. When arranging the plate structure, against and along the tube structure, at the caterpillar-shaped portions of soldering paste, said sharp edges cut into the soldering paste, in which the adjoining edge parts come into an intimate contact with the paste. This contact is further reinforced, considering the inclined nature of these edge parts, as a result of which it partially pushes open the paste caterpillar, in which the edge parts can still further be irrigated. This forms a perfect onset for the soldering paste to further flow out along the edge parts to solder when heating. When arranging the plate structure against the tube structure, it is crucial that the soldering paste is sufficiently viscous: as the work pieces connect with each other by means of point connections, there is nearly no capillary operation for the spreading of soldering paste. In common soldering connections, this is exactly considered as a requirement for a rigid soldering connection with the guarantee of a good heat transport. It has however been determined that, provided that the viscosity is sufficiently high, the sharp edges of the stretch metal get embedded much better in the soldering paste (i.e. the soldering paste).

Preferably, the caterpillar-shaped soldering paste has a width of minimal 0.5 mm and maximal 8 mm. Preferably, the caterpillar-shaped portion of soldering paste has a height of minimal 0.5 mm and maximal 8 mm, protruding from the upper side of the tube structure.

According to a further or alternative embodiment, the soldering paste comprises minimal 65% and maximal 85% of the metal powder, which metal power essentially comprises tin or copper. According to a further or alternative embodiment, the metal powder comprises approximately 97% of tin and approximately 3% of copper. Advantages of tin-copper alloys are that they offer a good heat connection, so that the tube structure can easily transfer heat to the plate structure, via conduction. The thermal conductivity of such alloys, at a temperature of 20°C, is situated between 62 W/m·K and 84 W/m.K. Another advantage of tin-copper alloys is that they offer a high tensile strength, situated in the range of 360 N/mm² to 1000 N/mm², as measured at a temperature of 25°C.

According to a further or alternative embodiment, said temperature path comprises a soldering temperature of minimal 270°C and maximal 300°C, in which the metal powder has an average particle size of maximal 75 µm. Metal particles with dimensions in the micron range has the characteristic that their merging temperature decreases with a decreasing particle size. In electronics, it is important that this soldering temperature (or the temperature for merging) is sufficiently low, requiring a small particle size. However, the present tube structure and plate structure can be heated to higher temperatures, as a result of which one can work with larger particles. As a result, the soldering paste is already more viscous, so that consistency data can be added in a lower concentration, and so that more solvents can be added, which improves the stickiness of the soldering paste and the flowing-out of the soldering. The higher soldering temperature of minimal 270°C also ensure a better irrigation of the work pieces to solder. As a result, sufficient surface is still available for thermal conduction.

In a further aspect, the invention also relates to a soldering paste as described above, that is appropriate for realizing the above-described method. A non-limiting embodiment has been described in example 1.

The heating zone is "positionally variable", in that sense that it locally heats and thereby scans the complete plate structure, so that all of the soldering paste finally has went through a temperature path for soldering. Preferably, the heating zone is a "progressing" heating zone, which progresses in the longitudinal direction, in which all soldering connection can be realized over the complete length of the plate structure. It will be clear that the "progressing heating zone" can both be obtained by moving a work piece with respect to an essentially fixed soldering installation, and by moving (movable parts of) a soldering installation with respect to an essentially stationary work piece.

Optionally, the soldering agent is a soldering paste, for example a soldering paste as described above.

Preferably, the plate structure, as well as the finally obtained heat exchange element have an elongated shape, in which they extend in the longitudinal direction, transverse to the width direction. According to a non-limiting embodiment, the plate structure is rectangular; this is however not necessarily the case. In particular, the plate width and plate length do not need to have a constant value, according to respectively the longitudinal and width direction. A typical problem with such plate structures is that they have a large surface; known methods always try to heat such work pieces globally. This however requires a very large soldering furnace/installation.

In any case, the inventors have determined that it is advantageous for such elongated work pieces to locally heat these work pieces, at a progressing heating zone, rather than to heat them globally. The final result is essentially the same, in which the soldering paste has passed through an appropriate temperature path for soldering at any location, however possibly mutually delayed in time. Preferably, the heating zone covers at any moment in time not more than 80% of the plate length and/or the plate surface, more preferably not more than 70%, more preferably not more than 60%, more preferably not more than 50%, and more preferably not more than 40%. The size (in longitudinal direction) of its heating zone, its temperature profile over this heating zone and its progressing speed can be controlled, for obtaining an optimal, local temperature path for the soldering paste.

The device, used for heating/soldering, can therefore be made very compact, and can consequently much more easily and efficiently be isolated. Moreover, this is accompanied by a lower installation cost and operating cost. Also, less space must be provided, and the method is more manoeuvrable; in particular, the production can be started and/or modified very quickly, and the heat losses, when switching off, are more limited, because of the smaller heat capacity of such a device.

In a further or alternative embodiment, the plate structure possesses a higher heat conduction according to the width direction rather than the longitudinal direction. The "law of Fourier" for heat conduction (i.e. thermal conduction) says that the heat flow is proportional to the temperature gradient in the structure, multiplied by the associated heat conduction coefficient. Increased heat conduction according to the width direction can for example take place when the plate structure is laminated according to the width direction, with alternating good and bad conductive plates. Another possibility is that the plate structure comprises elongated openings according to the width direction, especially hindering the heat transport in the longitudinal direction (because of average higher path length for heat transport). Of course, the invention is not at all limited to one of these structures. An improved heat conduction according to the width direction allows an essentially uniform heating according to the width direction, over the complete heating zone, when soldering. According to the longitudinal direction, on the other hand, a reduced heat conduction causes little soldering heat to leak away in this longitudinal direction; the soldering can thus take place locally, at a heating zone not covering the complete length of the plate structure. Preferably, the heating takes place at an essentially elongated, rectangular heating strip.

According to a further or alternative embodiment, the plate structure defines a plurality of openings, in which the heating comprises the step of conducting a heat air flow through one or more of said openings. Preferably, the method does not only comprise the "blowing against" the work piece, but actually the creating of an increased pressure along one side of the work piece, in which the air flow essentially (e.g. for minimal 50%, preferably minimal 60%, more preferably minimal 70%, more preferably minimal 80%) escapes through said openings from that area with increase pressure, instead of along the plate structure or the work piece. Thereby, an optimal convective heat exchange with opening edge parts takes place.

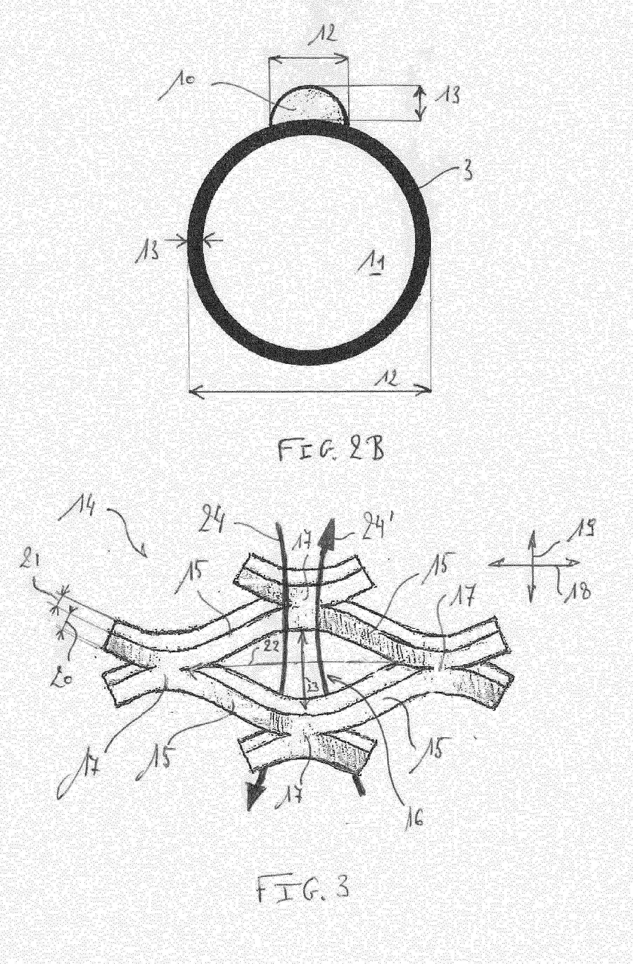

In this respect, a partially open plate structure is perfect for convective heat transfer, and even more at a uniform and/or regular spreading of the openings. Preferably, the plate structure has an openness (seen from above the lying plate) of minimal 10%, preferably minimal 20%, more preferably minimal 30%, for example approximately 40% or 50%. For stretch metal, the effective passage percentage is even higher, because of the nap, as explained in figure 3. It has been determined that alternative heating systems do not obtain the same efficiency, controllability, manoeuvrability and reproducibility. Inductive heat transfer, for example, is largely hindered by Foucault flows in the material, as a result of the openings. Radiative heat transfer (e.g. via infra-red radiation) neither offers satisfaction, as there is only a small effective absorption surface available.

Preferably, the soldering paste extends in the longitudinal direction. According to a preferred embodiment, the plate structure comprises a stretch metal, with a stretching direction extending according to the longitudinal direction of the plate structure. Thereby, the plate structure defines a plurality of openings oriented according to the width direction. Consequently, it shows an improved heat transfer according to that width direction. Preferably, the mesh length, mesh width and mesh size are such that there is an ideal ratio between heat transfer in the longitudinal and width direction. Preferably, the tube structure is a meandering structure, with long, straight segments essentially oriented according to the longitudinal direction. It thereby offers rigidity and heat transport along the longitudinal direction of the resulting element. The heating in the zone does not necessarily have to be uniform over that zone; for example, it is maximal at least at the portions of soldering means. It is however advantageous that the plate structure is also heated between the soldering connections, so that the heat injected there according to the width direction can migrate to the connection to solder - or even, so that the leaking of injected heat, at the soldering paste, is compensated.

Typically, a soldering paste (e.g. a soldering paste) has an optimal temperature path for soldering. This path is typically determined by the manufacturer, for obtaining a soldering connection that is as performing as possible. Such temperature path typically comprises at least a "preheating path" and a "soldering path", and optionally also a "penetration path" and/or a "cooling path". The "preheating", "penetrating" and "cooling" takes place below the soldering temperature. These phases/paths/zones aim to vary the temperature more gradually, for avoiding a thermal shock. The cooling preferably takes place fast enough, amongst other things to avoid crystal growth in the soldering paste.

According to a further or alternative embodiment, the heating zone comprises a preheating zone. Preferably, the heating zone also comprises a soldering zone, in which said zones extend along each other in the width direction. When passing the heating zone, the soldering paste is thereby first passed through the preheating zone, and only afterwards through the soldering zone. Optionally, the heating zone also comprises a penetration zone and/or a cooling zone.

According to a further or alternative embodiment, the air flow is led, in the preheating zone respectively the soldering zone, according to an opposite direction through the openings. Preferably, the heat air flow is led along the soldering zone in a first flowing direction through the openings, subsequently at the preheating zone in an essentially opposite, second flowing direction, through the openings. Thereby, it has already released a part of its heat content; so that the heat transfer at the preheating zone is attenuated, because of a lower temperature gradient. Optionally, the plate structure comprises stretch metal, and the nap of that stretch metal is such that the heated air flow is deflected at a first passage, at the soldering zone, in the direction of the preheating zone.

According to a further or alternative embodiment, the air flow is led way, with recuperation of heat. Preferably, the air flow has thereby already a first time (e.g. at the soldering zone) and a second time (e.g. at the preheating zone) passed through the partially open plate structure. Heat recuperation allows to minimize the thermal losses, as a result of which a higher energy efficiency is realized.

In a most preferred embodiment of the method, the plate structure comprises aluminium stretch metal, the tube structure comprises copper tube material, and the soldering paste comprises a soldering paste as described above. The efficiency is hereby exceptionally high, with amongst other things as a result of the excellent convective characteristics of the aluminium stretch metal, with its open structure, and the good internal heat conduction of the aluminium, the soldering connections and the copper.

In a further aspect, the invention also relates to a heat exchange element comprising a metal plate structure and a metal tube structure, connected with the plate structure in a heat conductive way. In particular, said element is thereby obtained by use of a method as described above, according to the first aspect of the invention. It should be emphasized that such an element can comprise one or more than one plate structure, as well as one or more than one tube structure, mutually connected in a sandwiched way with a heat exchange element. Preferably, the heat exchange element is in itself appropriate for heating and/or cooling spaces. However, optionally, the element can be embedded in a liquid, gel or solid agent, for exchanging heat with the embedding medium. Another possible application can be the heating and/or cooling of gas flows and/or liquid flows.

Optionally, the above-mentioned method also comprise a step of folding (e.g. by means of a swivelling bender) of one or both longitudinal edge parts (according to the longitudinal direction) and/or end edge parts (according to the width direction). This can be advantageous for free-hanging heat exchange elements, for example free-hanging ceiling elements. The element is thereby appropriate for spanning a larger distance, as each folded edge increases the bending resistance of the element. The folding of edge parts can be realized both before and after the soldering, and preferably after the soldering. In an analogous way, one or more folding ribs can be added in the plate structure, according to any direction in the plane of the plate structure, before and/or after the soldering.

In a second aspect, the invention relates to a device for soldering flat metal work pieces, which work pieces are provided with a soldering agent, the device comprising:
- a frame comprising a length direction and a width direction, which frame is provided with supporting means for supporting a work piece,
- a soldering chamber forming an open soldering mouth that comprises an open mouth edge part, for releasing a heated airflow along said soldering mouth and at said workpiece, for heating the work piece, further provided with a supplying means for supplying said heated air flow to said soldering chamber,
- at least one discharge chamber forming an open discharge mouth, further provided with a discharge means for discharging said air flow via said discharge chamber, and
- an advancing means, for advancing the soldering mouth and discharge mouth along and with respect to the work piece, in the length direction.
characterized in that said soldering mouth and said discharge mouth adjoin each other in said length direction.

Optionally, the device is thereby appropriate for realizing a method according to the first and/or according to the second aspect of the invention, in which the above-mentioned characteristics and associated advantages can be repeated.

In any case, the soldering mouth preferably defines a soldering zone at the flat work piece, essentially bordered by said mouth edge part of the soldering mouth. The same advantages can be repeated in this context. In particular, the invention can be applied to a work piece comprising an open plate structure, in which heated air from the soldering chamber is forced into the plate structure via the soldering mouth, with an optimal convective heat transfer.

In a further or alternative embodiment, the mouth edge part is essentially elongated and rectangular and it extends according to the width direction. In a further or alternative embodiment, the device further also comprises progressing means, for passing the soldering mouth along the work piece, in the longitudinal direction. Thereby, the device is able to generate a passing heating zone at the work piece, with the above-mentioned advantages. Preferably, the work piece width is shorter than the work piece length, so that the dimensions of the soldering chamber and soldering mouth can be taken as small as possible in the width direction. Their dimensions into the longitudinal direction are essentially determined by the targeted temperature path, and are also influenced by the flow temperature, flow rate and progressing speed.

In a further or alternative embodiment, the invention comprises at least one discharge chamber, and discharge means for discharging an air flow from the discharge chamber, which discharge chamber forms an open discharge mouth. Preferably, these discharge means connect with an energy recuperation system, for recuperating heat from the air flow that has already exchanged heat with the work piece. Preferably, both the supply means and the discharge means are provided with sensors for measuring air temperature and/or flow rate.

Preferably, the device also comprises a heat screen, in which the work pieces between the heat screen and the soldering chamber, can pass (closely) along the soldering mouth. The heat screen deviates the air flow through the at least partially open work piece in a sideward direction up to the discharge chamber, where the air flow is suck. Optionally, the air flow thereby passes a second time through openings in the work piece. Preferably, the heat screen has a surface that is larger than the soldering mouth opening, preferably at least twice as large and maximal 100 times as large, for example about 3, 4 or 5 times as large.

In a further or alternative embodiment, the discharge mouth is provided along the soldering mouth. Preferably, the discharge mouth also has an open mouth edge part, with which it creates a preheating zone and/or penetration zone on the work piece. Preferably, both mouth edge parts essentially extend in the same plane. Optionally, there also is a second and/or third discharge chamber with discharge mouth and mouth edge part, providing the penetration zone and/or cooling zone. The discharge means are thereby adapted in such way that an appropriate temperature path for the work pieces can be realized. The adjoining arrangement of the soldering chambers and discharge chambers makes the final device very compact.

In a further or alternative embodiment, the soldering chambers encloses an air distribution chamber, which air distribution chamber comprises a plurality of blow-out openings. Such an air distribution chamber ensures a more equal and turbulent spreading of the supplied, heated air stream within the soldering chamber. This contributes to a uniform heating profile of the work piece in to the width direction. Preferably, said blow-out openings are essentially directed in the direction of the soldering mouth. Preferably, both the air distribution chamber and the soldering chamber extend in the width direction. Preferably, in particular, the air distribution chamber thereby has a significant cross-section, e.g. at least ten times larger than the cross-section of the supply means, with a view to pressure adjustment according to the width direction, within these air distribution chamber and consequently also within the soldering chamber.

In a further or alternative embodiment, the blow-out openings comprise regularly positioned blow-out grooves, which blow-out grooves essentially extend according to the longitudinal direction. For example, the device is thereby used for soldering elements with a meandering tube structure, comprising straight tube segments in the longitudinal direction, in which said blow-out grooves are at least positioned at these tube segments. More preferably, their positioning is narrower.

In a further or alternative embodiment, the air distribution chamber extends in to the width direction, thereby comprising a width-adjustable closing flange. Thereby, a distal end of the air distribution chamber (with adjustable length) can be closed off from the air supply, as a result of which the active width of the device can be adjusted. The device is thereby appropriate for soldering different work pieces with a different work piece width. According to possible, alternative embodiments, the air distribution chamber has a cross-section that narrows slightly towards the distal end, in the width direction. The narrowing thereby contributes to the pressure adjustment in these air distribution chamber, in to the width direction, taking into account the escape of air through the blow-out openings/grooves.

In a further or alternative embodiment, the device further also comprises one or more press rolls, provided along said soldering mouth. Such press rolls ensure a better fit of the parts of the work piece (e.g. plate structure and a tube structure) when soldering.

According to a further or alternative embodiment, the device is appropriate for realizing the method according to the first and/or to the second aspect of the invention.

In the following, the invention will be described by means of non-limiting examples and figures illustrating the invention, and not meant to be interpreted as limiting the scope of the invention.
**Example 1** relates to a composition for a soldering paste, appropriate for use in embodiments of methods according to the first aspect of the invention. The soldering paste comprises approximately 75% of metal powder and approximately 25% of flowing agent. The metal powder, on the one hand, with an average particle size of approximately 55 µm, is made of a SnCu alloy. Essentially, this alloy comprises approximately 97% of tin and approximately 3% of copper. Optionally, the metal powder also comprises other trace elements / compounds, however in much lower percentages. The melting range of the alloy is situated between approximately 230°C and approximately 250°C. The flowing agent, on the other hand, essentially comprises solvents, activators and consistency providers. The viscosity of the soldering paste is thereby situated between 290 Pa·s and 330 Pa·s. In particular, the activators are configured for etching away the oxide skin of aluminium away, so that the soldering paste can be used perfectly for mutually connecting aluminium objects (e.g. an aluminium plat structure) and copper objects (e.g. a copper tube structure). The melting range of the soldering paste is thereby situated between approximately 227°C and approximately 310°C; appropriate soldering temperature are situated between 270°C and 300°C. The tensile strength of copper-aluminium compounds, obtained by soldering it by means of the present soldering paste, was determined experimentally to be minimal approximately 360 N/mm² and maximal approximately 1000 N/mm². The thermal conductivity of the resulting soldering compound, at a temperature of 20°C, is situated between approximately 62 W/m·K and approximately 84 W/m.K.
**Example 2** relates to a method for fabricating a heat exchange element, according to an embodiment of the method according to the first aspect of the invention. In any case, one starts with a flat meandering copper tube, essentially comprising straight segments and successive oppositely curved segments, and further a flat, aluminium stretch metal plate. The copper tube has a diameter of approximately 8 mm, and a wall thickness of approximately 0.5 mm. In an alternative example, the copper tube has a diameter of approximately 12 mm. In a first step, this copper tube is arranged horizontally. Subsequently, on top of each of the straight segments, a caterpillar-shaped portion of soldering paste is applied, extending on and along that segment. This caterpillar shape thereby has a height of minimal 0.5 mm and maximal 5 mm, preferably between 1.2 mm and 1.5 mm, protruding from the upper side of the tube, and a width of minimal 1 mm and maximal 6 mm, preferably between 2.5 mm and 3.5 mm. With a view to a good dosability and stickability of the soldering paste, in combination with a good maintenance of the shape, the soldering paste has a viscosity of minimal approximately 290 Pa·s and maximal approximately 330 Pa·s. Optionally, it is the soldering paste according to the present example 1. This viscosity value is in particular important for use of stretch metal structures, that can only connect with a tube structure via point contacts. Because of the total lack of caterpillar operation around point connections, an excellent flowing behaviour of the paste is thereby necessary.

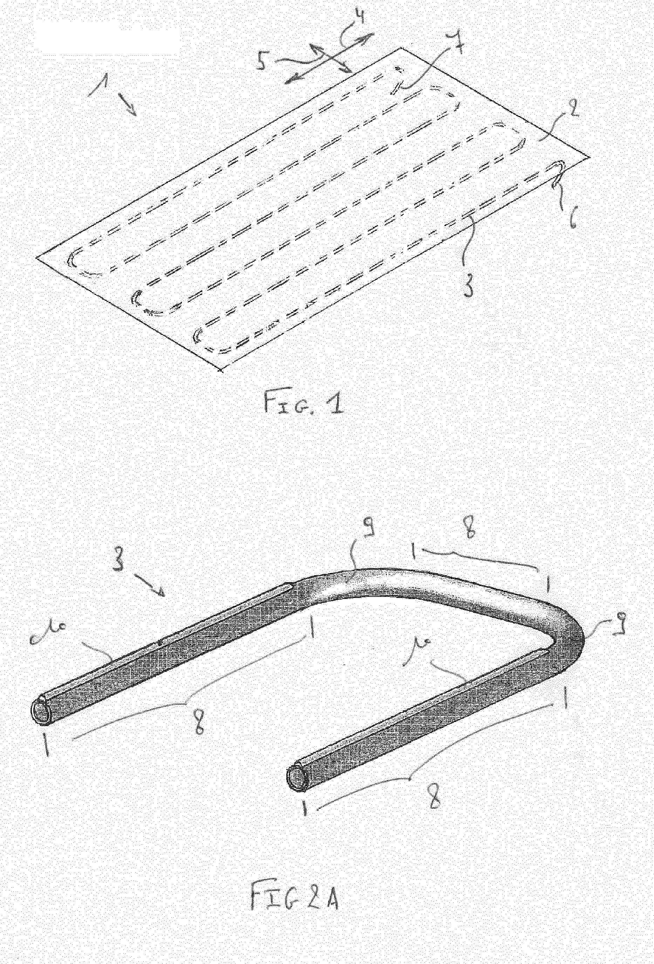

**Figure 1** shows a perspective view of a heat exchange element 1, according to an embodiment of the present invention. The element 1 comprises an elongated rectangular plate structure 2 and a meandering tube structure 3 - shown in dotted line through the plate structure 2. With respect to the plate structure 2, a longitudinal direction 4 and a width direction 5 can also be indicated. The tube structure itself comprises connections for the supply 6 and discharge 7 of a heat conducting medium.

**Figure 2A** is a detailed illustration of a part of a tube structure 3, according to a possible embodiment. The tube structure 3 comprises straight tube segments 8 and curved tube segments 9 (or curve segments). For example, the global structure 3 thereby has a meandering shape, but this is not necessarily the case. Along the upper side, the tube structure is provided with two (caterpillar-shaped) portions of soldering paste 10. Optionally, the plate structure 2 has been arranged against and along the tube structure 3 in such way that the longitudinal direction 4 of the plate structure 2 extends according to these caterpillar-shaped portions of soldering paste 10.

**Figure 2B** shows another cross-section of a tube structure 3, according to a possible embodiment. Possibly, it relates to a cross-section of the tube structure 3 according to figure 2A. The tube volume 11 is thereby appropriate for transporting a heat transport medium. The tube itself has a tube diameter 12 and a wall thickness 13. Along the upper side, a portion of soldering paste 10 has been applied onto the tube 3. The soldering paste 10 possesses such a viscosity that it does not drip downwards from the tube 3, as a result of the gravity. It relates for example to a caterpillar-shaped portion of soldering paste 10 extending transversely to the plane of the figure, with a caterpillar width 12 and a caterpillar height 13, protruding from the upper side of the tube 3.

The shown tube structure 3 has a round cross-section. Of course, the invention is not limited to tube structures 3 with a round cross-section; the tube structure 3 can also have a square, rectangular or other cross-section.

**Figure 3** is a detailed illustration of a piece of stretch metal 14. The stretch metal 14 comprises a plurality of stretch bridges 15, defining stretch meshes 16 in between, and connecting with each other at knuckles 17. The stretch bridges 15 each have a bridge width 20 and a bridge thickness 21. Typically, such a piece of stretch metal 14 is obtained, from a piece of tin-plate metal, by cutting it according to the width direction/transverse direction 18, and subsequently by stretching it according to the stretching direction 19. When stretching, the stretch bridges 15 bend, and they form an open and substantially flat structure, however with a profiling from the plane. The openness of the stretch metal 14 is also determined by the size of the stretch meshes 16 - via the mesh width 22 and the mesh length 23, as well as by the density of the stretch meshes 16. Moreover, a passing air flow will experience less resistance - or a larger openness -, when it flows according to the "nap direction" 24, 24'. Such a nap 24, 24' is a direct consequence of the stretching process, and arises together with said profiling of the material. With respect to the shown piece of stretch metal 14, an air flow, passing from the front/back, to the back/front, through the stretch metal 14, will experience less resistance according to the shown respective nap directions 24, 24', thus in opposite direction. The shown stretch metal 14 can for example be applied as plate structure 2 in the present invention; preferably, the stretching direction 19 of the stretch metal 14 is thereby oriented according to the longitudinal direction 4 of the plate structure 2 and the heat exchange element 1.

The shown stretch metal 14 has a so-called "wide-shaped mesh". Of course, the invention is not limited to a particular type of stretch metal 14, and the stretch mesh 16 can also have a square, round, hexagonal or other shape.

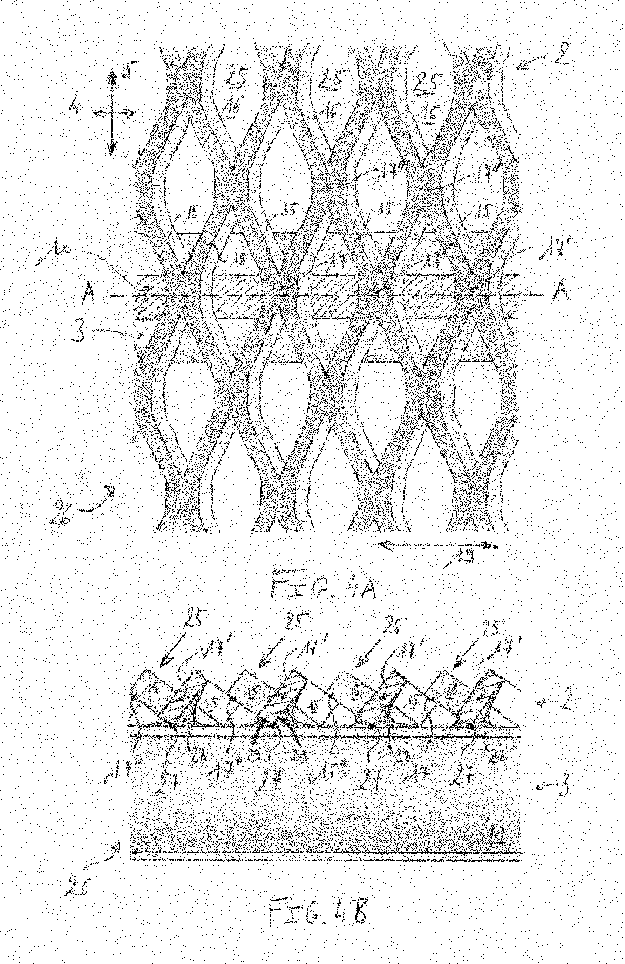

**Figure 4A** shows a plan view of a stretch metal plate structure 2, arranged on a tube structure 3, according to an embodiment of a method according to the first aspect of the invention. Thereby, a series of knuckles 17' of the plate structure 2 at a caterpillar-shaped portion of soldering paste 10 is arranged on the tube structure 3. However, this is not necessarily the case; preferably, it is at least such that a part of the soldering paste 10 is forced through one or more openings 25 in the plate structure 2 when mutually arranging. Optionally, the plate structure 2 is a stretch metal, with a stretching direction 19. For example, it relates to a stretch metal according to the embodiment of figure 3. In any case, the plate structure 2 defines a plurality of openings 25, and at least a part of the soldering paste 10 is forced into the openings 25 when arranging. The plate structure 2 and tube structure 3 are optionally comprised by a heat exchange element 1 according to an embodiment of the present invention, comprising a longitudinal direction 4 and a width direction.

**Figure 4B** is a cross-section of the work piece 26 of figure 4A, taken along cross-section A-A. The work piece 26 comprises a plate structure 2, arranged on a tube structure 3, at a series of knuckles 17'. Thereby, the original caterpillar-shaped portion of soldering paste 10 is forced into or through a series of openings 25 of the plate structure 2. The knuckles 17' have a downward, sharp edge, where they form a contact point 27 with the tube structure 3. When mutually arranging the plate structure 2 against the tube structure 3, the soldering paste 10 is as it were cut open and forced along the inclined opening edge parts 29. The soldering paste 10 is thereby in intimate contact with both the plate structure 2 and the tube structure 3; this is an ideal onset for the paste 10 to further flow, when heating and/or soldering, towards that contact point 27, and along the opening edge parts 29, for forming rigid "point"-shaped soldering connections 28. Possibly, only a thin layer of soldering means 10 stays behind on the tube surface, as has been shown in figure 4A. This is however not necessarily the case.

As an alternative, the tube structure 3 can also be arranged between two series of knuckles (e.g. between knuckles 17' and knuckles 17"), in which the deeper situated stretch bridges 16 have a downward, sharp edge, for forming a contact point 27 with that tube structure 3.

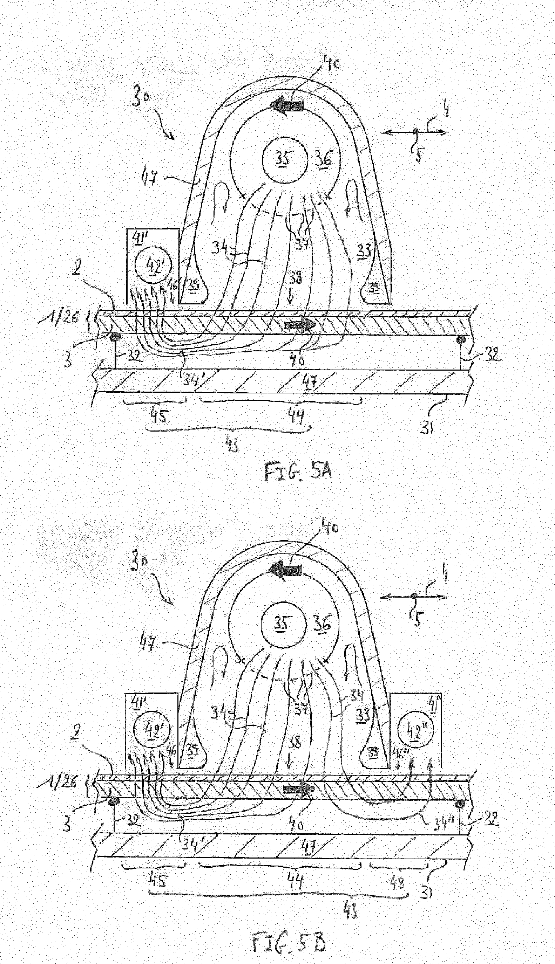

**Figure 5A** shows a schematic cross-section of a soldering device 30 according to an embodiment of the invention, as possibly applied in the method according to the first aspect of the invention. The soldering device 30 thereby comprises a frame 31 provided with supporting means 32 for supporting a work piece 26 (e.g. a heat exchange element 1 in production), and further also a soldering chamber 33 for exposing that work piece 26 to a heated air flow 34. The soldering device 30 also comprises supply means 35 for supply of the air flow 34 via an air distribution chamber 35, at the soldering chamber 33. Thereto, the air distribution chamber 36 is provided with downward blow-out openings 37, which are essentially directed towards a soldering mouth 38 of the soldering chamber 33. The soldering mouth 38 is thereby bordered by a mouth edge part 39, for at least partially closing off the soldering mouth 38 and the soldering chamber 33 against and along the work piece 26. With respect to the frame 31, a longitudinal direction 4 and a width direction 5 can now be indicated, preferably extending along the longitudinal direction 4 and width direction 5 of the heat exchange element 1. The frame 31 is further provided with progressing means, for mutually passing 40 the soldering mouth 38 along the work piece 1, preferably along the longitudinal direction 4. This mechanism thereby comprises at least a moveable soldering mouth 38 or a moveable work piece 1. Optionally, the supporting means 32 comprise rolling bodies, for supporting work pieces 26 in a rolling moveable way. Now, the device 30 is further also provided with a first discharge chamber 41' and discharge means 42' for discharge an air flow 34' via that discharge chamber 41', along a discharge mouth 46' at that discharge chamber 41'. For example, the latter air flow 34' at least comprises a part of said heated air flow 34. Thus, the heating takes place in a heating zone 43 at the plate structure 2, which heating zone 43 comprises a preheating zone 45, at the first discharge mouth 46', and comprises a soldering zone 44, at the soldering mouth 38. Thus, a heated air flow 34 goes in a downward direction through the plate structure 2 at the soldering zone 44. At least a part of the flow 34' deflects in a sideward direction to pass through the same plate structure 2, at the preheating zone 45. The device 30 further also comprises thermally isolating structures 47, for limiting the heat losses as much as possible.

**Figure 5B** shows a schematic cross-section of a similar soldering device 30, now further comprising a second discharge chamber 41" and discharge means 42" for discharge an air flow 34' via that discharge chamber 41', along a discharge mouth 46' at that discharge chamber 41'. For example, the latter air flow 34" at least comprises a part of said heated air flow 34. The heating zone 43 thereby further comprises a cooling zone 48, at the second discharge mouth 46", for the delayed cooling of the work piece 26. The preheating zone 45, the soldering zone 44 and the cooling zone 48 extend along each other according to the width direction 5, transverse to the figure.

The positive gas pressure in the soldering chamber 33, the negative gas pressures in the first discharge chamber 41' and the second discharge chamber 41", as well as the flow rates and temperatures of the relevant air flows 34 and the underlying speed of progressing 40 of the discharge mouth 46 and soldering mouth on the one hand and the work piece 26 on the other hand, are set in such way that the soldering paste (e.g. a soldering paste 10) passes the most ideal temperature path. Optionally, the plate structure 2 comprises stretch metal 14, in which the nap direction 24 is provided in such way that the heat air stream 34 is mainly lead through the plate structure 2, in the direction of the preheating zone 45, rather than in the direction of a possible cooling zone 48.

It should be emphasized that said preheating zone 45, soldering zone 44 and cooling zone 48 do not exactly correspond with the corresponding "paths" from the ideal or imposed temperature path for the soldering paste. However, typically, these "zones" and these "paths" will at least partially overlap.

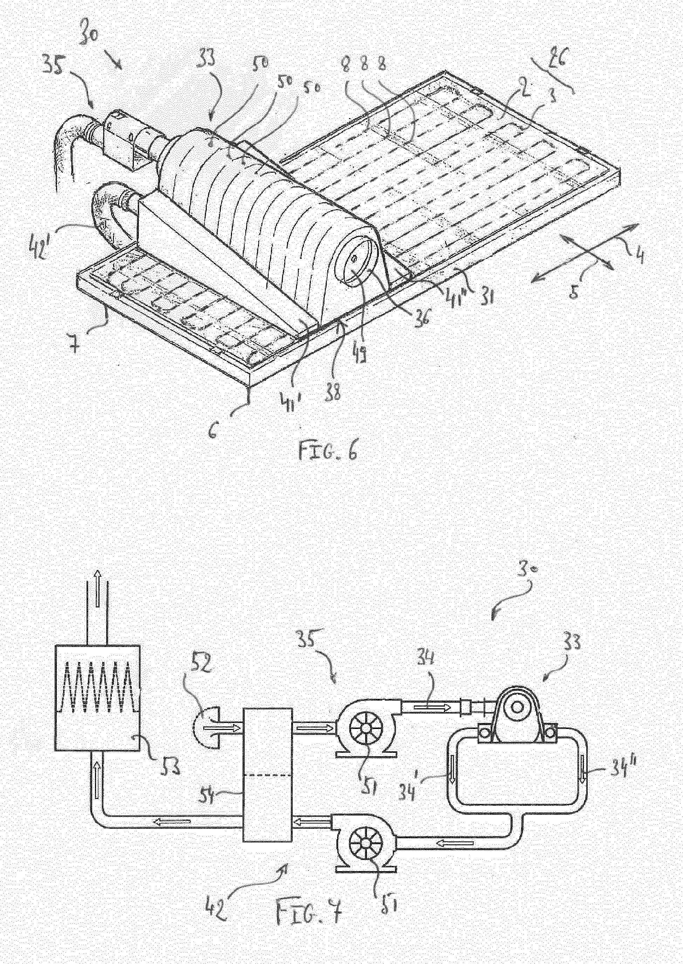

**Figure 6** shows another perspective view of a soldering device 30 according to an embodiment of the invention. Optionally, it relates to the soldering device 30 of figure 5B. In any case, the device 30 comprises a frame 31 with a longitudinal direction 4 and a width direction 5. The frame 31 is thereby appropriate for maintaining a plate structure 2 and a meandering tube structure 3, shown in dotted line through the plate structure 2. The device 30 further also comprises a soldering chamber 33 with a rectangular soldering mouth 38 that essentially spans the complete width of the work piece 26, and that can be moved according to the longitudinal direction 4 with respect to the work piece 26. Thereto, the work piece 26 or the soldering mouth 38 can at least be moved in the longitudinal direction 4. The soldering chamber 33 is internally provided with an air distribution chamber 36, which chamber 36 extends with an essentially invariant cross-section according to the width direction through the soldering chamber 33. The air distribution chamber 36 is thereby internally provided with a width-adjustable closing flange 49. A supplied air flow 34, from supply means 35, cannot pass beyond the closing flange 49. Only these blow-out openings 37, up to the closing flange 49, can thus provide the soldering space 33 with a heated air flow 34. This allows application of the device 30 on work pieces 26 of different widths, in which the closing flange 49 is set correspondingly. Optionally, the blow-out openings 37 are blow-out grooves (not shown in the figure), essentially oriented according to the longitudinal direction, in which at least one groove is provided along and above each tube segment 8. Additionally or moreover, the soldering chamber can comprise two or more chamber modules 50. The number of chamber modules 50 is thereby chosen and modified, depending on the width of the work pieces to solder 26. Along both sides of the soldering chamber 33, a first 41' and a second 41" discharge chamber also extend; for example, it relates to discharge chambers 41 as described above. Both are provided with discharge means 42.

**Figure 7** shows another embodiment of a device 30 for soldering flat metal work pieces 26, for example comprising the soldering chamber 33 according to one of the previous figures. The device 30 further also comprises supply means 35 for the supply of a heat air flow 34 to the soldering device 30, and discharge means 42 for the discharge of an outgoing air flow 34' and 34". The device 30 thereby comprises turbines 51 for the control of these air flows 34, 34', 34". Said supply means 35 comprise a suction 52 of fresh air, and said discharge means comprise a filter system 53 (e.g. comprising a carbon filter) for filtering the outgoing air flow, before discharging it. Furthermore, the device also comprises a heat exchanger 54, for recuperation of heat from the outgoing air flows 34', 34", in the new incoming air flow 34.

The device can further be provided with means for pressing the plate structure against the tube structure, during, before and/or subsequent to soldering. Such means can comprise rolling bodies and/or sliding bodies; preferably, they exercise a mechanical pressure onto the plate structure. An additional advantage is that they optionally further close off the plate structure against the soldering mouth/discharge mouth, so that the air flow is significantly forced through the plate structure.

The enumerated elements on the figures are:
- 1.: Heat exchange element
- 2.: Plate structure
- 3.: Tube structure
- 4.: Longitudinal direction
- 5.: Width direction
- 6.: Connection supply
- 7.: Connection discharge
- 8.: Straight tube segment
- 9.: Curved segment
- 10.: Soldering paste
- 11.: Tube volume
- 12.: Caterpillar width
- 13.: Caterpillar height
- 14.: Stretch metal
- 15.: Stretch bridge
- 16.: Stretch mesh
- 17.: Knuckle
- 18.: Transverse direction
- 19.: Stretch direction
- 20.: Bridge width
- 21.: Bridge thickness
- 22.: Mesh width
- 23.: Mesh length
- 24.: Nap
- 25.: Opening
- 26.: Work piece
- 27.: Contact point
- 28.: Soldering connection
- 29.: Opening edge part
- 30.: Soldering device
- 31.: Frame
- 32.: Supporting means
- 33.: Soldering chamber
- 34.: Air flow
- 35.: Supply means
- 36.: Air distribution chamber
- 37.: Blow-out opening
- 38.: Soldering mouth
- 39.: Mouth edge part
- 40.: Progressing
- 41.: Discharge chamber
- 42.: Discharge means
- 43.: Heating zone
- 44.: Soldering zone
- 45.: Preheating zone
- 46.: Discharge mouth
- 47.: Thermal isolation
- 48.: Cooling zone
- 49.: Closing flange
- 50.: Chamber module
- 51.: Turbines
- 52.: Suction
- 53.: Filter
- 54.: Heat exchanger

It will be understood that the present invention is not limited to the embodiments described above and that some adjustments or changes can be added to the described examples without changing the scope of the enclosed claims.

## Claims

1. A method for the fabrication of a heat exchange element (1), the element (1) comprising a metal tube structure (3) and a metal plate structure (2), which tube structure (3) is connected to the plate structure (2) in a heat-conducting way, wherein the tube structure (3) is further configured for transporting a heat transport medium, the method comprising the following steps:
- providing the tube structure (3) and the plate structure (2),
- applying one or more portions of soldering agent (10), against and along the tube structure (3),
- arranging the plate structure (2) against and along the tube structure (3), at least in the area of the soldering agent (10), and
- heating the soldering agent (10) according to a predefined temperature path that comprises at least a pre-heating path and a soldering path suitable for establishing a soldering connection (28) between said plate structure (2) and said tube structure (3);
the plate structure (2) comprising a length direction (4) and a width direction (5), in which directions (4, 5) the plate structure (2) has a plate length and a plate width, respectively, and **characterized in that** the heating takes place in a heating zone (43) that advances along said plate structure (2) in said length direction (4), which zone (43) minimally covers the plate width, and maximally covers only a part of the plate length.

2. The method of the previous claim 1, **characterized in that** the plate structure (2) has a higher heat conduction according to the width direction (5) than according to the length direction (4).

3. The method of any one of the previous claims 1 and 2, **characterized in that** the plate structure (2) defines a plurality of openings (25), in which said heating comprises the step of guiding a heated air flow (34) through one or more of the openings (25).

4. The method of the previous claim 3, **characterised in that** said heating zone (43) comprises a preheating zone (45).

5. The method of the previous claim 4, **characterized in that** the air flow (34') is guided, in the preheating zone (45), in an opposite direction through the openings (25).

6. The method of any one of the previous claims 3 and 5, **characterised in that** the air flow (34') is guided away, with recuperation of heat.

7. The method of any one of the previous claims 1 to 6, **characterized in that** the soldering connection (28) extends along the length direction (4).

8. A device (30) for soldering flat metal work pieces (26), which work pieces (26) are provided with a soldering agent (10), the device (30) comprising:
- a frame (31) comprising a length direction (4) and a width direction (5), which frame (31) is provided with supporting means (32) for supporting a work piece (26),
- a soldering chamber (33) forming an open soldering mouth (38) that comprises an open mouth edge part (39), for releasing a heated air flow (34) along said soldering mouth (38) and at said workpiece (26), for heating the work piece (26), further provided with a supplying means (35) for supplying said heated air flow (34) to said soldering chamber (33),
- at least one discharge chamber (41) forming an open discharge mouth (46), further provided with a discharge means (42) for discharging said air flow (34') via said discharge chamber (41), and
- an advancing means, for advancing the soldering mouth (38) and discharge mouth (46) along and with respect to the work piece (26), in the length direction (4).
**characterized in that** said soldering mouth (38) and said discharge mouth (46) adjoin each other in said length direction (4).

9. The device (30) of the previous claim 8, **characterized in that** the soldering mouth edge part (39) is elongated and rectangular, and extends in the width direction (5).

10. The device of any one of claims 8-9, **characterized in that** the soldering chamber (33) encloses an air distribution chamber (36), which air distribution chamber (36) comprises a plurality of blow-out openings (37).

11. The device (30) of the previous claim 10, **characterized in that** the blow-out openings (37) comprise blow-out grooves positioned at regular intervals, which blow-out grooves essentially extend in the length direction (4).

12. The device (30) of any one of the previous claims 10-11, **characterized in that** the air distribution chamber (36) extends along the width direction (5), and thereby comprises a width-adjustable closing flange (49).

## Patentansprüche

1. Verfahren zur Herstellung eines Wärmetauschelements (1), wobei das Element (1) eine metallische Rohrstruktur (3) und eine metallische Plattenstruktur (2) umfasst, wobei die Rohrstruktur (3) auf eine wärmeleitende Weise mit der Plattenstruktur (2) verbunden ist, wobei die Rohrstruktur (3) ferner dafür gestaltet ist, ein Wärmetransportmedium zu transportieren, wobei das Verfahren die folgenden Schritte umfasst:
- Bereitstellen der Rohrstruktur (3) und der Plattenstruktur (2),
- Anbringen eines oder mehrerer Abschnitte von Lötmittel (10) an und entlang der Rohrstruktur (3),
- Anordnen der Plattenstruktur (2) an und entlang der Rohrstruktur (3) zumindest in dem Bereich des Lötmittels (10) und
- Erwärmen des Lötmittels (10) gemäß einem vordefinierten Temperaturweg, der mindestens einen Vorerwärmungsweg und einen Lötweg umfasst, der zum Herstellen einer Lötverbindung (28) zwischen der Plattenstruktur (2) und der Rohrstruktur (3) geeignet ist,
wobei die Plattenstruktur (2) eine Längenrichtung (4) und eine Breiterichtung (5) umfasst, wobei die Plattenstruktur (2) in diese Richtungen (4, 5) eine Plattenlänge beziehungsweise eine Platenbreite aufweist, und **dadurch gekennzeichnet, dass** das Erwärmen in einer Erwärmungszone (43) stattfindet, die in der Längenrichtung (4) entlang der Plattenstruktur (2) vorrückt, wobei die Zone (43) minimal die Plattenbreite abdeckt und maximal nur einen Teil der Plattenlänge abdeckt.

2. Verfahren nach dem vorhergehenden Anspruch 1, **dadurch gekennzeichnet, dass** die Plattenstruktur (2) gemäß der Breiterichtung (5) ein höheres Wärmeleitvermögen aufweist als gemäß der Längenrichtung (4).

3. Verfahren nach einem der vorhergehenden Ansprüche 1 und 2, **dadurch gekennzeichnet, dass** die Plattenstruktur (2) mehrere Öffnungen (25) definiert, wobei das Erwärmen den Schritt des Führens eines erwärmten Luftstroms (34) durch eine oder mehrere der Öffnungen (25) umfasst.

4. Verfahren nach dem vorhergehenden Anspruch 3, **dadurch gekennzeichnet, dass** die Erwärmungszone (43) eine Vorwärmzone (45) umfasst.

5. Verfahren nach dem vorhergehenden Anspruch 4, **dadurch gekennzeichnet, dass** der Luftstrom (34') in der Vorwärmzone (45) in einer entgegengesetzten Richtung durch die Öffnungen (25) geleitet wird.

6. Verfahren nach einem der vorhergehenden Ansprüche 3 und 5, **dadurch gekennzeichnet, dass** der Luftstrom (34') unter Rückgewinnung von Wärme abgeleitet wird.

7. Verfahren nach einem der vorhergehenden Ansprüche 1 bis 6, **dadurch gekennzeichnet, dass** sich die Lötverbindung (28) entlang der Längenrichtung (4) erstreckt.

8. Vorrichtung (30) zum Löten flacher metallischer Werkstücke (26), wobei die Werkstücke (26) mit einem Lötmittel (10) versehen sind, wobei die Vorrichtung (30) Folgendes umfasst:
- einen Rahmen (31), der eine Längenrichtung (4) und eine Breiterichtung (5) umfasst, wobei der Rahmen mit Trägermitteln (32) versehen ist, um ein Werkstück (26) zu tragen,
- eine Lötkammer (33), die eine Lötmundöffnung (38) bildet, die ein Mundöffnungs-Randteil (39) umfasst, um einen erwärmten Luftstrom (34) entlang des Lötmundes (38) und auf das Werkstück (26) freizusetzen, um das Werkstück (26) zu erwärmen, ferner mit einem Zufuhrmittel (35) versehen, um der Lötkammer (33) den erwärmten Luftstrom (34) zuzuführen,
- mindestens eine Auslasskammer (41), die eine Auslassmundöffnung (46) bildet und ferner mit einem Auslassmittel (42) zum Auslassen des Luftstroms (34') über die Auslasskammer (41) versehen ist, und
- ein Vorrückmittel zum Vorrücken des Lötmundes (38) und des Auslassmundes (46) entlang am und im Verhältnis zur dem Werkstück (26) in der Längenrichtung (4),
**dadurch gekennzeichnet, dass** der Lötmund (38) und der Auslassmund (46) in der Längenrichtung (4) aneinander angrenzen.

9. Vorrichtung nach dem vorhergehenden Anspruch 8, **dadurch gekennzeichnet, dass** das Mundöffnungs-Randteil (39) länglich und rechteckig ist und sich in der Breiterichtung (5) erstreckt.

10. Vorrichtung nach einem der vorhergehenden Ansprüche 8 bis 9, **dadurch gekennzeichnet, dass** die Lötkammer (33) eine Luftverteilungskammer (36) umschließt, wobei die Luftverteilungskammer (36) mehrere Ausblasöffnungen (37) umfasst.

11. Vorrichtung (30) nach dem vorhergehenden Anspruch 10, **dadurch gekennzeichnet, dass** die Ausblasöffnungen (37) Ausblasrillen umfassen, welche in regelmäßigen Abständen positioniert sind, wobei sich die Ausblasöffnungen im Wesentlichen in der Längsrichtung (4) erstrecken.

12. Vorrichtung (30) nach einem der vorhergehenden Ansprüche 10 bis 11, **dadurch gekennzeichnet, dass** sich die Luftverteilungskammer (36) entlang der Breiterichtung (5) erstreckt und dadurch einen in der Breite justierbaren Verschlussflansch (49) umfasst.

## Revendications

1. Procédé de fabrication d'un élément (1) d'échange de chaleur, l'élément (1) comprenant une structure de tube (3) métallique et une structure de plaque (2) métallique, laquelle structure de tube (3) est raccordée à la structure de plaque (2) d'une manière thermoconductrice, dans lequel la structure de tube (3) est en outre configurée pour transporter un milieu de transport de chaleur, le procédé comprenant les étapes suivantes :
- fourniture de la structure de tube (3) et de la structure de plaque (2),
- application d'une ou plusieurs portions d'agent de brasage (10), contre la structure de tube (3) et le long de celle-ci,
- agencement de la structure de plaque (2) contre la structure de tube (3) et le long de celle-ci, au moins dans la région de l'agent de brasage (10), et
- chauffage de l'agent de brasage (10) selon un trajet de température prédéfini qui comprend au moins un trajet de préchauffage et un trajet de brasage approprié pour établir un raccord de brasage (28) entre ladite structure de plaque (2) et ladite structure de tube (3) ;
la structure de plaque (2) comprenant une direction longitudinale (4) et une direction transversale (5), directions (4, 5) dans lesquelles la structure de plaque (2) a une longueur de plaque et une largeur de plaque, respectivement, et **caractérisé en ce que** le chauffage a lieu dans une zone de chauffage (43) qui avance le long de ladite structure de plaque (2) dans ladite direction longitudinale (4), laquelle zone (43) couvre au minimum la largeur de plaque, et couvre au maximum seulement une partie de la longueur de plaque.

2. Procédé selon la revendication précédente 1, **caractérisé en ce que** la structure de plaque (2) a une conduction thermique plus élevée selon la direction transversale (5) que selon la direction longitudinale (4).

3. Procédé selon l'une quelconque des revendications précédentes 1 et 2, **caractérisé en ce que** la structure de plaque (2) définit une pluralité d'ouvertures (25), dans laquelle ledit chauffage comprend l'étape de guidage d'un flux d'air (34) chauffé à travers une ou plusieurs des ouvertures (25).

4. Procédé selon la revendication précédente 3, **caractérisé en ce que** ladite zone de chauffage (43) comprend une zone de préchauffage (45).

5. Procédé selon la revendication précédente 4, **caractérisé en ce que** le flux d'air (34') est guidé, dans la zone de préchauffage (45), dans une direction opposée à travers les ouvertures (25).

6. Procédé selon l'une quelconque des revendications précédentes 3 et 5, **caractérisé en ce que** le flux d'air (34') est guidé de façon à être évacué, avec récupération de chaleur.

7. Procédé selon l'une quelconque des revendications précédentes 1 à 6, **caractérisé en ce que** le raccord de brasage (28) s'étend le long de la direction longitudinale (4).

8. Dispositif (30) de brasage de pièces métalliques plates (26), lesquelles pièces (26) sont pourvues d'un agent de brasage (10), le dispositif (30) comprenant :
- un cadre (31) comprenant une direction longitudinale (4) et une direction transversale (5), lequel cadre (31) est pourvu de moyens de support (32) pour supporter une pièce (26),
- une chambre de brasage (33) formant une bouche de brasage (38) ouverte qui comprend une partie de bord de bouche (39) ouverte, pour libérer un flux d'air (34) chauffé le long de ladite bouche de brasage (38) et au niveau de ladite pièce (26), pour chauffer la pièce (26), en outre pourvue d'un moyen de fourniture (35) pour fournir ledit flux d'air (34) chauffé à ladite chambre de brasage (33),
- au moins une chambre d'évacuation (41) formant une bouche d'évacuation (46) ouverte, en outre pourvue d'un moyen d'évacuation (42) pour évacuer ledit flux d'air (34') par l'intermédiaire de ladite chambre d'évacuation (41), et
- un moyen d'avancée, pour faire avancer la bouche de brasage (38) et la bouche d'évacuation (46) le long de la pièce (26) et par rapport à celle-ci, dans la direction longitudinale (4)
**caractérisé en ce que** ladite bouche de brasage (38) et ladite bouche d'évacuation (46) se jouxtent dans ladite direction longitudinale (4).

9. Dispositif (30) selon la revendication précédente 8, **caractérisé en ce que** la partie de bord de bouche (39) de brasage est allongée et rectangulaire, et s'étend dans la direction transversale (5).

10. Dispositif selon l'une quelconque des revendications 8 ou 9, **caractérisé en ce que** la chambre de brasage (33) renferme une chambre de distribution d'air (36), laquelle chambre de distribution d'air (36) comprend une pluralité d'ouvertures de soufflage (37).

11. Dispositif (30) selon la revendication précédente 10, **caractérisé en ce que** les ouvertures de soufflage (37) comprennent des rainures de soufflage positionnées à intervalles réguliers, lesquelles rainures de soufflage s'étendent essentiellement dans la direction longitudinale (4).

12. Dispositif (30) selon l'une quelconque des revendications précédentes 10 ou 11, **caractérisé en ce que** la chambre de distribution d'air (36) s'étend le long de la direction transversale (5), et comprend ainsi une bride de fermeture (49) à largeur réglable.
